# EUROPÄISCHE PATENTSCHRIFT

(11) **EP 0 960 398 B1**
(45) Veröffentlichungstag und Bekanntmachung des Hinweises auf die Patenterteilung: **28.11.2001**
(21) Anmeldenummer: 97920564.8
(22) Anmeldetag: 01.04.1997
(51) Int. Cl.: G07D 7/00

(54) **VERFAHREN UND VORRICHTUNG ZUR QUALITATIVEN BEURTEILUNG VON BEARBEITETEM MATERIAL**
PROCESS AND DEVICE FOR ASSESSING THE QUALITY OF PROCESSED MATERIAL
PROCEDE ET DISPOSITIF POUR EVALUER LA QUALITE D'UN MATERIAU TRAITE

(30) Priorität: 02.04.1996 DE 19613082
(43) Veröffentlichungstag der Anmeldung: 01.12.1999
(73) Patentinhaber: Koenig & Bauer Aktiengesellschaft, 97080 Würzburg (DE)
(72) Erfinder: BOLZA-SCHÜNEMANN, Claus, August, D-97084 Würzburg (DE); SCHAEDE, Johannes, Georg, D-97074 Würzburg (DE)
(86) Internationale Anmeldenummer: DE9700654
(87) Internationale Veröffentlichungsnummer: WO9737329

(56) Entgegenhaltungen:
- EP-A- 0 537 513
- EP-A- 0 658 721
- DE-A- 4 103 832
- DE-A- 4 123 916
- US-A- 4 715 715

## Beschreibung

Die Erfindung betrifft ein Verfahren und eine Vorrichtung zur qualitativen Beurteilung von bearbeitetem Material gemäß dem Oberbegriff der Ansprüche 1, 4 bis 8.

Die US-A-47 15 715 zeigt eine Vorrichtung zum Messen einer Farbe eines Materials mittels einer Beleuchtungseinrichtung und eines Sensors zur Spektralanalyse.

Die DE 41 23 916 A1 beschreibt eine Vorrichtung zum Erkennen von Merkmalen eines Objektes.

Dabei wird das Objekt über eine Optik so beleuchtet, daß für alle Punkte einer ebenen Objektoberfläche die Reflexionswinkelbedingung erfüllt wird.

Die EP 05 27 453 B1 offenbart eine Vorrichtung zum qualitativen Beurteilen von bedrucktem Material mittels einer Beleuchtungseinrichtung und einer CCD-Kamera.

Der Erfindung liegt die Aufgabe zugrunde, ein Verfahren und eine Vorrichtung zur qualitativen Beurteilung von bearbeiteten Material zu schaffen.

Diese Aufgabe wird erfindungsgemäß durch die Merkmale des kennzeichnenden Teiles der Ansprüche 1, 4 bis 8 gelöst.

In vorteilhafter Weise können mit dem erfindungsgemäßen Verfahren bzw. der Vorrichtung reflektierende Bereiche auf zu inspizierendem Material erkannt werden.

Die Beleuchtungseinrichtung der erfindungsgemäßen Vorrichtung ist durch ihren V-förmigen Querschnitt platzsparend ausgebildet. Die Erstreckung der Beleuchtungseinrichtung quer zur Transportrichtung des zu inspizierenden Materials wird so minimiert.
Auch in Transportrichtung ist die Länge der Beleuchtungseinrichtung gering, da äußerst vorteilhaft das zu inspizierende Material entlang einer gekrümmten Führungsfläche geführt wird. Zusätzlich wird infolge dieser Krümmung ein zu inspizierender Bogen stabilisiert.
Durch auf die Beleuchtungseinrichtung aufgesetzte Shutter wirken nur vorzugsweise auf die reflektierenden Bereiche gerichtete Lichtstrahlen, die von den reflektierenden Bereichen des zu inspizierenden Materials in die CCD-Flächenkamera annähernd totalreflektiert werden.
Durch diese Ausführungsformen von Beleuchtungseinrichtung und Führungsfläche werden beispielsweise Streulichteinflüsse reduziert und ein gerichteter Strahlengang der Beleuchtungseinrichtung erzeugt.

Die erfindungsgemäße Vorrichtung ist in der Zeichnung dargestellt und wird im folgenden näher beschrieben.

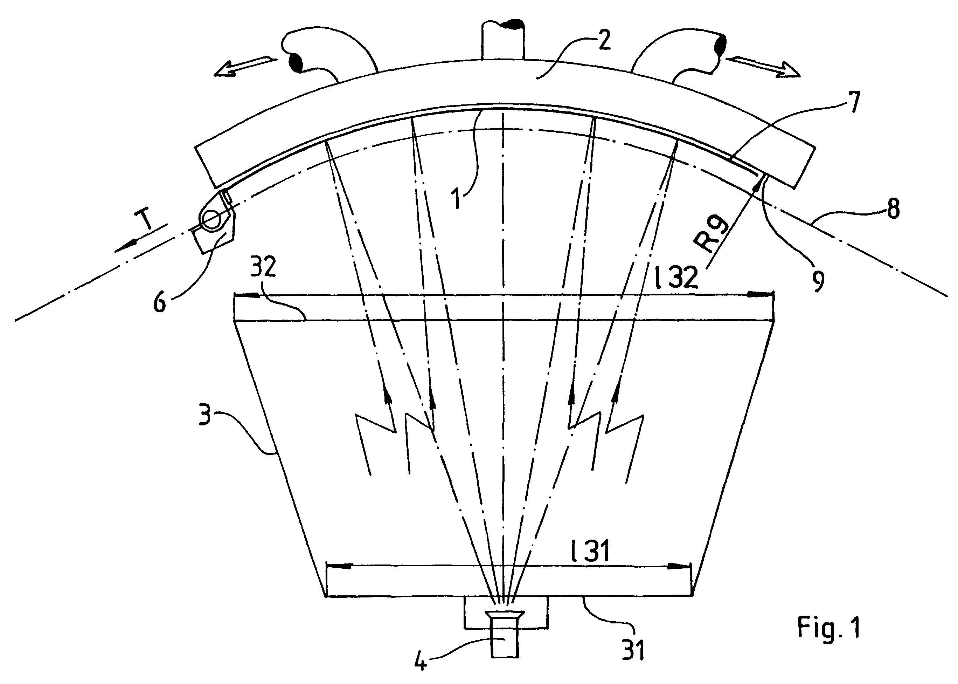

Es zeigen
- Fig. 1: eine schematische Seitenansicht einer Vorrichtung zum qualitativen Beurteilen von bedruckten Bogen;

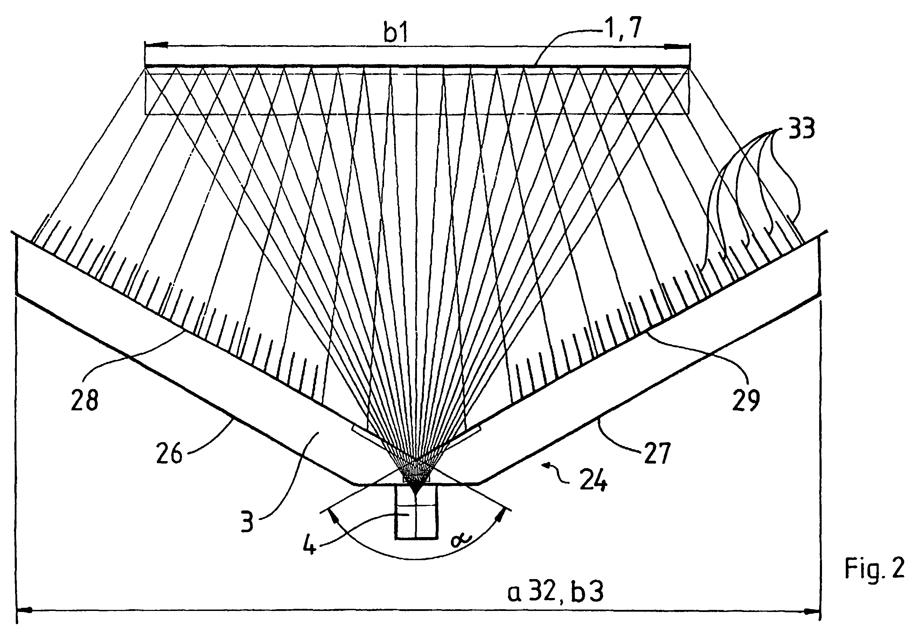

- Fig. 2: eine schematische Ansicht einer Vorrichtung zum qualitativen Beurteilen in Transportrichtung der bedruckten Bogen;

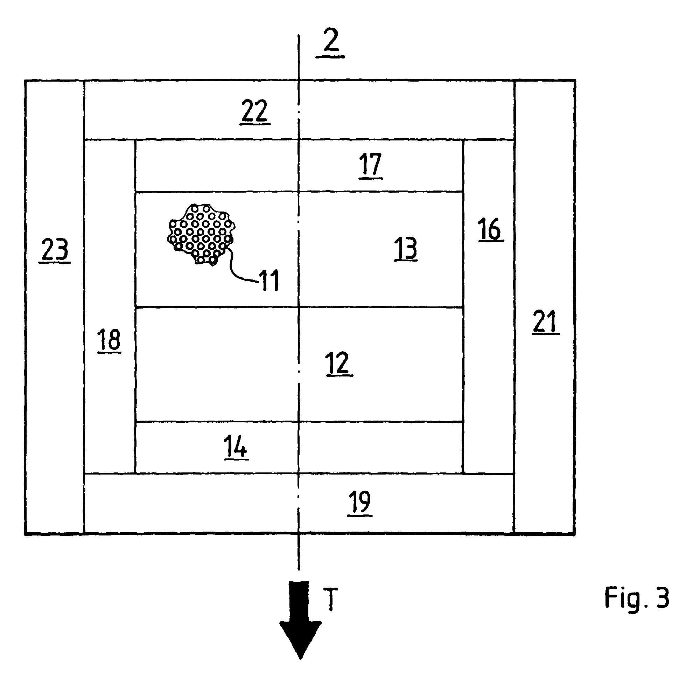

- Fig. 3: eine schematische Draufsicht auf einen Saugkasten der Vorrichtung zum qualitativen Beurteilen von bedruckten Bogen;

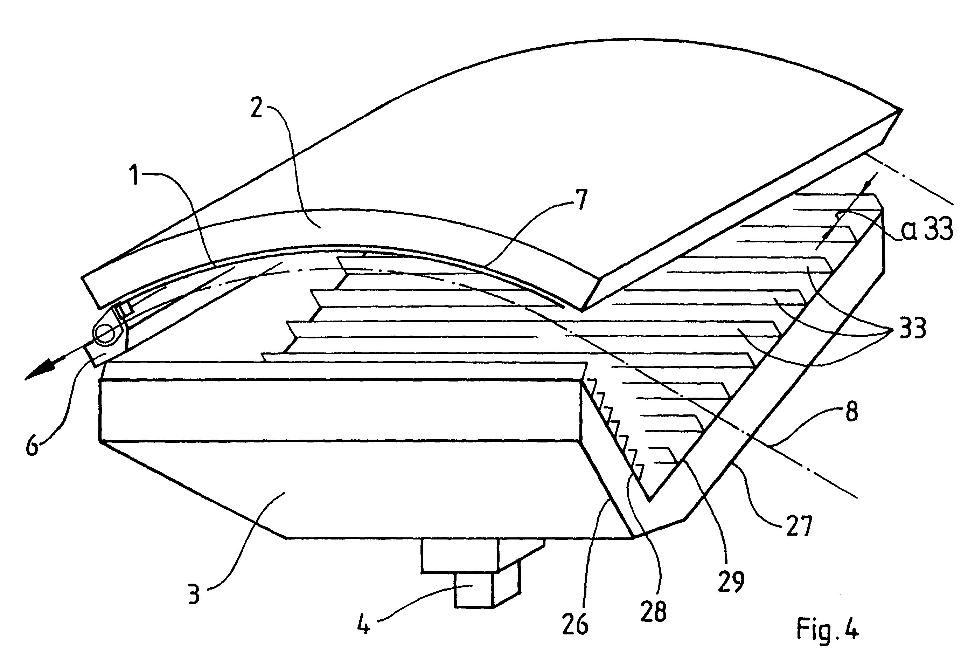

- Fig. 4: eine perspektivische Ansicht der Vorrichtung.

Eine Vorrichtung zur qualitativen Beurteilung von bearbeiteten Material 1 besteht im wesentlichen aus einer Führung 2, einer Beleuchtungseinrichtung 3, mindestens einem Sensor 4 und einer nachgeschalteten Auswerteeinrichtung.
Dieses Qualitätskontrollsystem kann zur überwachung sowohl von bedruckten Bahnen als auch von bedruckten Bogen 1 in einer Rotationsdruckmaschine oder einer Weiterverarbeitungsmaschine eingesetzt werden. Im vorliegenden Ausführungsbeispiel wird das Qualitätskontrollsystem in einer Bogenrotationsdruckmaschine für Wertpapiere, insbesondere für Banknoten, verwendet.

Zu inspizierende Bogen 1 werden beispielsweise mittels Greifersystemen 6 in einer Bogentransportebene 7 transportiert. Diese Greifersysteme 6 sind an umlaufenden Ketten 8 eines an sich bekannten Kettenförderes befestigt. Oberhalb der Bogentransportebene 7 ist die Führung 2 angeordnet. Diese Führung 2 weist beispielsweise an ihrer den Bogen 1 zugewandten Führungsfläche 9 eine in Transportrichtung T gekrümmte Form auf. Diese Führungsfläche 9 ist also in Transportrichtung T konkav gebogen und weist einen Krümmungsradius R9, z. B. R9 = 800 mm, auf. Die Führung 2 ist beispielsweise als Saugkasten 2 ausgebildet. Dazu ist die Führungsfläche 9 mit einer Vielzahl von Lochungen 11 versehen, d.h. die Führungsfläche 9 wird von einem Lochblech gebildet. Die Lochungen 11 weisen beispielsweise einen Durchmesser von 2mm auf und sind in einem Raster mit einem Abstand von 3mm beabstandet. Diese Führungsfläche 9 ist austauschbar (mit verschiedenen Lochungen) und zu Wartungsarbeiten aufklappbar angeordnet.
Innerhalb des Saugkastens 2 sind Trennwände angeordnet, so daß eine Anzahl von unabhängig wirkenden, getrennt regelbaren Saugkammern 12 bis 23 gebildet wird. In der Mitte des Saugkastens 2 ist ein annähernd dem kleinsten Format der zu bearbeitenden Bogen 1 entsprechender Bereich in Transportrichtung T in eine vordere 12 und hintere Saugkammer 13 unterteilt. An die vier Seiten dieses rechteckigen Bereiches schließt sich jeweils eine weitere Saugkammer 14, 16, 17, 18 an. Auch neben diesen Saugkammern 14, 16, 17, 18 sind in Richtung außen liegender Kanten des Bogens 1 nochmals vier Saugkammern 19, 21, 22, 23 angeordnet, wobei die in Transportrichtung T verlaufenden äußeren Saugkammern 21, 23 nochmals unterteilt sein können.
Ein Unterdruck in den einzelnen Saugkammern 12 bis 23 ist individuell, z. B. mittels Bypass-Regelung, einstellbar. Somit kann eine auf die Bogen 1 wirkende Haltekraft auf z. B. Format, Material oder Bearbeitungsart der Bogen 1 angepaßt werden.

Dem Saugkasten 2 gegenüberliegend ist die Beleuchtungseinrichtung 3 und der Sensor 4 angeordnet. Die Beleuchtungseinrichtung 3 weist in Transportrichtung T einen V-förmigen Querschnitt auf, d.h. sie ist als V-förmiger Kasten 24 ausgebildet. Dieser Kasten 24 weist zwei Schenkel 26, 27 mit ebenen, den zu inspizierenden Bogen 1 zugewandten Lichtaustrittsflächen 28, 29 auf.
Diese Schenkel 26, 27 schließen einen öffnungswinkel alpha von beispielsweise 122° ein. Dieser öffnungswinkel alpha weist vorzugsweise einen Bereich von 90° bis 150° auf. Jede der beiden Lichtaustrittsflächen 28, 29 ist trapezförmig ausgebildet. Dabei stoßen die kürzeren von beiden Grundseiten 31, 32 aneinander und verlaufen parallel zur Transportrichtung T. Die beiden kurzen Grundseiten 31 weisen eine Länge l31 von z. B 350 mm auf. Die beiden größeren Grundseiten 32 mit einer Länge l32, z. B. l32 = 560 mm verlaufen ebenfalls parallel zur Transportrichtung T und sind quer zur Transportrichtung T in einem Abstand a32, z. B. a32 = 1220mm, beabstandet, der einer Breite b3 der Beleuchtungseinrichtung 3 entspricht. Dieser Abstand a32 ist größer als eine größte Breite b1, z. B. 840 mm, der zu inspizierenden Bogen 1.
Die Größe und Form der Beleuchtungseinrichtung ist also auf das Format der zu inspizierenden Bogen angepaßt.
Die Lichtaustrittsflächen 28, 29 bestehen beispielsweise aus Milchglasscheiben. Unter diesen Milchglasscheiben sind jeweils eine Mehrzahl von diffus strahlender Lichtquellen angeordnet. Diese Lichtquellen sind beispielsweise als Einzelblitzröhren ausgebildet. Durch diese Anordnung von Lichtquellen und Milchglasscheiben wird eine besonders gleichmäßige Ausleuchtung der zu inspizierenden Bogen 1 erreicht.
Die Beleuchtungseinrichtung 3 kann anstelle des V-förmigen Querschnitts auch einen gekrümmten beispielsweise kreisbogenförmigen Querschnitt aufweisen.

Auf die Milchglasscheibe aufgesetzt können auch eine Mehrzahl von parallel in Transportrichtung T verlaufender Leitstege 33 ("Shutter") sein. Diese Leitstege 33 können beispielsweise aus Blech oder ebenfalls aus Milchglas gefertigt sein. Ein Neigungswinkel dieser Leitstege 33 bezüglich der Lichtaustrittsflächen 28, 29 bzw. Bogentransportebene 7 ist annähernd parallel zu einem Lichtstrahl verlaufend angepaßt, wobei ein solcher zwischen zwei Leitstegen 33 gerichteter Lichtstrahl auf einen reflektierenden Bereich des Bogens 1 nach dortiger Reflexion auf den Sensor 4 trifft.
Diese Leitstege 33 weisen zueinander einen Abstand a33, z. B. a33 = 20 mm auf.
Die Beleuchtungseinrichtung kann auch aus mehreren einzeln angeordneter Lichtquellen bestehen.

In einem Zentrum dieser Beleuchtungseinrichtung 3 ist der Sensor 4 angeordnet. Als Sensor 4 ist im vorliegenden Beispiel eine CCD-Flächenkamera 4 mit vorgeschaltetem Objektiv vorgesehen. Die Objektiv ist im vorliegenden Beispiel derart ausgelegt, daß der gesamte zu inspizierende Bogen 1 erfaßt wird, d.h. ein Abstand zwischen der CCD-Flächenkamera 4 und der Bogentransportebene 7 ist auf das Objektiv der CCD-Flächenkamera 4 angepaßt. Es ist aber auch möglich mehrere Teile einzeln nacheinander zu erfassen und zu einem Gesamtbild zusammenzufügen. Der zu inspizierende Bogen 1 befindet sich in der optischen Achse des Objektives der CCD-Flächenkamera 4.

In dem Saugkasten ist im vorliegenden Ausführungsbeispiel ein nichtdargestellter als Trigger wirkender Sensor eingebaut. Dieser Sensor erfaßt die Vorderkante des zu inspizierenden Bogens 1 und löst den Inspektionsvorgang aus. Dieser Sensor ist in Transportrichtung T verstellbar angeordnet, um die Position des Bogens bei verschieden großen Bogenformaten derart auszurichten, daß die Inspektion annähernd mittig zum Objektiv der CCD-Flächenkamera 4 erfolgt.

Der CCD-Flächenkamera 4 ist eine Auswerteeinrichtung nachgeschaltet.
Ein Bild des zu inspizierenden Bogens 1 ist in eine Matrix bestehend aus einer Vielzahl von kleinen Bildelementen, d.h. Pixeln, unterteilt. Jedem dieser Pixel ist eine genaue Lage durch die Angabe dessen Koordinaten in X und Y Richtung eines kartesischen Koordinatensystems zugeordnet. Zudem wird seinem Remissionswert, z. B. seinem Grauwert, ein diesen bestimmenden Wert Z zugeordnet. Jeder Pixel Pᵢ(Xᵢ, Yᵢ, Zᵢ) ist somit durch die Angabe der Werte Xᵢ, Yᵢ, Zᵢ in Lage und Größe genau bestimmt.
Das auf die einzelnen Pixel P ᵢ vom Bogen 1 remittierte Licht wird von der CCD-Flächenkamera 4 entprechend seiner Menge in ein elektrisches Analogsignal umgewandelt. Dieses Analogsignal wird einem A/D Wandler zugeführt, der daraus die digitalen Werte Zᵢ bildet. üblicherweise wird dafür der Wertebereich in 0 bis 255 diskrete Werte aufgelöst. Dabei bedeutet der Wert 0 keinerlei auf den entsprechenden Pixel Pᵢ der CCD-Flächenkamera 4 treffende Remission, während 255 maximaler Remission entspricht.

In dem hier vorliegenden Anwendungsfall weist der zu inspizierende Bogen 1 oder Bahn reflektierende Flächen, insbesondere Sicherheitsmerkmale auf. Unter "reflektierend" ist diesem Zusammenhang zu verstehen, daß auf die Flächen auftreffende, gerichtete Lichtstrahlen mit schwacher Streuung und merklich gerichtetem Anteil reflektiert werden. Solche Flächen können insbesondere Silberfäden einer Banknote oder beispielsweise Hologramme bzw. Kinegramme, also Sicherheitsmerkmale, sein. Diese reflektierenden Flächen müssen als solche erkannt werden.
Den Werten der Pixel Pᵢ eines solchen Bogens 1 wird nun ein Wertebereich derart zugeordnet, daß der auftretende Wertebereich außerhalb der reflektierenden Flächen deutlich innerhalb der Grenzen 0 und 255 liegt. In der Praxis wird dann beispielsweise der Farbe "weiß" ein Wert Zᵢ von 180 bis 200 und der Farbe "schwarz" ein Wert Zᵢ von 10 bis 30 zugeordnet.
Diese Zuordnung erfolgt beispielsweise mittels Einstellung der Helligkeit der Beleuchtungseinrichtung 3, der Verstärkung des Kamerasignals in der Auswerteelektronik oder einer Blende des Objektives der CCD-Flächenkamera 4.

Der Bogen 1 wird mittels der Beleuchtungseinrichtung 3 derart gleichmäßig beleuchtet, daß jede an einer beliebigen Stelle des Bogens 1 befindliche Fläche, die nahezu ideal reflektierende Eigenschaften aufweist, einen einfallenden Lichtstrahl direkt in die CCD-Flächenkamera 4 reflektiert ("Totalreflexion"). Dazu werden zumindest teilweise gerichtete Lichtstrahlen verwendet.
Der zugehörige Wert Zᵢ eines Pixels Pᵢ nimmt bei Reflexion einen Wert an, der sich deutlich von einem der Farbe "weiß" zugeordneten Wert unterscheidet. Beispielsweise erreicht dann der Wert Zᵢ eines einer reflektierenden Fläche zugeordneten Pixels Pᵢ 230 bis 255.

Somit sind Bereiche mit reflektierenden Flächen über die Zuordnung extremer Werte Zᵢ eindeutig festgelegt, d.h. Bereiche, die schwach streuen, mit merklich gerichteten Anteil werden von diffus reflektierenden Bereichen unterschieden.

Die den spiegelnden Flächen zugeordnete Pixel werden dann von der Auswerteelektronik als solche erkannt und dementsprechend weiterverarbeitet.

### Bezugszeichenliste

- 1: Bogen, Material
- 2: Saugkasten, Führung
- 3: Beleuchtungseinrichtung
- 4: CCD-Flächenkamera, Sensor
- 5: -
- 6: Greifersystem
- 7: Bogentransportebene
- 8: Kette
- 9: Führungsfläche (2)
- 10: -
- 11: Lochung
- 12: Saugkammer
- 13: Saugkammer
- 14: Saugkammer
- 15: -
- 16: Saugkammer
- 17: Saugkammer
- 18: Saugkammer
- 19: Saugkammer
- 20: -
- 21: Saugkammer
- 22: Saugkammer
- 23: Saugkammer
- 24: Kasten
- 25: -
- 26: Schenkel (24)
- 27: Schenkel (24)
- 28: Lichtaustrittsfläche (3)
- 29: Lichtaustrittsfläche (3)
- 30: -
- 31: Grundseite
- 32: Grundseite
- 33: Leitsteg

- a32: Abstand der Grundseiten (32)
- a33: Abstand der Leitstege (33)

- b1: Breite der Bogen (1)
- b3: Breite der Beleuchtungseinrichtung (3)

- R9: Krümmungsradius der Führungsfläche (9)

- l31: Länge der Grundseite (31)
- l32: Länge der Grundseite (32)

- alpha: öffnungwinkel

## Patentansprüche

1. Verfahren zur qualitativen Beurteilung von bearbeitetem Material (1) mittels mindestens einer Beleuchtungseinrichtung (3), mindestens eines photoelektrischen Sensors (4) und einer mit diesem zusammenwirkenden Auswerteeinrichtung, **dadurch gekennzeichnet, daß** mittels der Anordnung des zu inspizierenden Materials (1), der Beleuchtungseinrichtung (3) und des Sensors Reflexionswinkel derart festgelegt werden, daß jeder schwach streuende, mit merklich gerichtetem Anteil reflektierende Bildbereich des zu inspizierenden Materials (1) reflektierte Lichtstrahlen nahezu vollständig auf den Sensor (4) reflektiert und daß das zu inspizierende Material (1) zur Erzeugung eines benötigten Reflexionswinkels der Lichtstrahlen reversibel verformt wird.

2. Verfahren nach Anspruch 1, **dadurch gekennzeichnet, daß** als Sensor (4) eine CCD-Flächenkamera (4) verwendet wird.

3. Verfahren nach Anspruch 1, **dadurch gekennzeichnet, daß** das zu inspizierende Material (1) entlang einer gekrümmten Führungsfläche (9) geführt wird.

4. Verfahren zur qualitativen Beurteilung von Material (1) mittels mindestens einer Beleuchtungseinrichtung (3), mindestens eines photoelektrischen Sensors (4) und einer mit diesem zusammenwirkenden Auswerteeinrichtung, wobei das Material (1) bedruckt und mit mindestens einem Sicherheitsmerkmal, insbesondere mit einem schwach streuenden, merklich gerichteten Anteil reflektierenden Bildbereich versehen wird, **dadurch gekennzeichnet, daß** mittels der Anordnung des zu inspizierenden Materials (1), der Beleuchtungseinrichtung (3) und des Sensors Reflexionswinkel derart festgelegt werden, daß jedes schwach streuende, mit merklich gerichtetem Anteil reflektierende Sicherheitsmerkmal des zu inspizierenden Materials (1) reflektierte Lichtstrahlen nahezu eine Totalreflexion auf den Sensor (4) bewirkt und daß diese Totalreflexion zur Erkennung des Sicherheitsmerkmals verwendet wird.

5. Vorrichtung zur qualitativen Beurteilung von bearbeitetem Material (1) mittels mindestens einer Beleuchtungseinrichtung (3), mindestens eines photoelektrischen Sensors (4) und einer mit diesem zusammenwirkenden Auswerteeinrichtung, **dadurch gekennzeichnet, daß** das zu inspizierende Material (1), die Beleuchtungseinrichtung (3) und der Sensor zur Festlegung von Reflexionswinkel derart angeordnet sind, daß jeder nahezu ideal reflektierende Bildbereich des zu inspizierenden Materials (1) nahezu eine Totalreflexion der auf diesen Bildbereich treffenden Lichtstrahlen auf den Sensor (4) bewirkt, daß die Beleuchtungseinrichtung (3) zwei, V-förmig angeordnete Lichtaustrittsflächen (28, 29) aufweist und daß eine Breite (b3) der Beleuchtungseinrichtung (3) größer als eine größte Breite (b1) des zu inspizierenden Materials (1) ist.

6. Vorrichtung zur qualitativen Beurteilung von bearbeitetem Material (1) mittels mindestens einer Beleuchtungseinrichtung (3), mindestens eines photoelektrischen Sensors (4) und einer mit diesem zusammenwirkenden Auswerteeinrichtung, **dadurch gekennzeichnet, daß** das zu inspizierende Material (1), die Beleuchtungseinrichtung (3) und der Sensor zur Festlegung von Reflexionswinkel derart angeordnet sind, daß jeder nahezu ideal reflektierende Bildbereich des zu inspizierenden Materials (1) nahezu eine Totalreflexion der auf diesen Bildbereich treffenden Lichtstrahlen auf den Sensor (4) bewirkt, daß auf der Lichtaustrittsfläche (28, 29) der Beleuchtungseinrichtung (3) Leitstege (33) angeordnet sind und daß diese Leitstege (33) annähernd parallel zu entsprechenden, zu reflektierenden Lichtstrahlen verlaufend angeordnet sind.

7. Vorrichtung zur qualitativen Beurteilung von bearbeitetem Material (1) mittels mindestens einer Beleuchtungseinrichtung (3), mindestens eines photoelektrischen Sensors (4) und einer mit diesem zusammenwirkenden Auswerteeinrichtung, **dadurch gekennzeichnet, daß** das zu inspizierende Material (1), die Beleuchtungseinrichtung (3) und der Sensor zur Festlegung von Reflexionswinkel derart angeordnet sind, daß jeder nahezu ideal reflektierende Bildbereich des zu inspizierenden Materials (1) nahezu eine Totalreflexion der auf diesen Bildbereich treffenden Lichtstrahlen auf den Sensor (4) bewirkt und daß zur Führung des zu inspizierenden Materials (1) eine gekrümmte Führungsfläche (7) vorgesehen ist.

8. Verfahren zur qualitativen Beurteilung von bearbeitetem Material (1) mittels mindestens einer Beleuchtungseinrichtung (3), mindestens eines photoelektrischen Sensors (4) und einer mit diesem zusammenwirkenden Auswerteeinrichtung, **dadurch gekennzeichnet, daß** mittels der Anordnung des zu inspizierenden Materials (1), der Beleuchtungseinrichtung (3) und des Sensors Reflexionswinkel derart festgelegt werden, daß jeder schwach streuende, mit merklich gerichtetem Anteil reflektierende Bildbereich des zu inspizierenden Materials (1) reflektierte Lichtstrahlen nahezu vollständig auf den Sensor (4) reflektiert, daß ein Bild des zu inspizierenden Materials (1) in eine Vielzahl von Pixeln Pᵢ (Xᵢ; Yᵢ; Zᵢ) zerlegt wird und einem Pixel bei Reflexion ein Wert zugeordnet wird, der sich von einem der Farbe "weiß" zugeordneten Wert unterscheidet.

## Claims

1. Method for the qualitative assessment of processed material (1) by means of at least one illumination device (3), at least one photoelectric sensor (4) and an evaluation device co-operating with the latter, **characterized in that**, by means of the arrangement of the material (1) to be inspected, the illumination device (3) and the sensor, reflection angles are defined in such a way that each weakly scattering image area of the material (1) to be inspected which reflects with a noticeably directed component reflects reflected beams of light virtually completely onto the sensor (4), and **in that** the material (1) to be inspected is deformed reversibly in order to produce a requisite reflection angle of the beams of light.

2. Method according to Claim 1, **characterized in that** the sensor (4) used is a two-dimensional CCD camera (4).

3. Method according to Claim 1, **characterized in that** the material (1) to be inspected is guided along a curved guide surface (9).

4. Method for the qualitative assessment of material (1) by means of at least one illumination device (3), at least one photoelectric sensor (4) and an evaluation device co-operating with the latter, the material (1) being printed and provided with at least one security feature, in particular with a weakly scattering image area which reflects a noticeably directed component, **characterized in that**, by means of the arrangement of the material (1) to be inspected, the illumination device (3) and the sensor, reflection angles are defined in such a way that each weakly scattering security feature of the material (1) to be inspected which reflects with a noticeably directed component effects virtually total reflection onto the sensor (4), and **in that** this total reflection is used to detect the security feature.

5. Apparatus for the qualitative assessment of processed material (1) by means of at least one illumination device (3), at least one photoelectric sensor (4) and an evaluation device co-operating with the latter, **characterized in that** the material (1) to be inspected, the illumination device (3) and the sensor for defining the reflection angle are arranged in such a way that each virtually ideally reflecting image area of the material (1) to be inspected effects virtually total reflection of the beams of light incident on this image area onto the sensor (4), **in that** the illumination device (3) has two light exit surfaces (28, 29) arranged in a V shape, and **in that** a width (b3) of the illumination device (3) is greater than a greatest width (b1) of the material (1) to be inspected.

6. Apparatus for the qualitative assessment of processed material (1) by means of at least one illumination device (3), at least one photoelectric sensor (4) and an evaluation device co-operating with the latter, **characterized in that** the material (1) to be inspected, the illumination device (3) and the sensor for defining reflection angle are arranged in such a way that each virtually ideally reflecting image area of the material (1) to be inspected effects virtually total reflection of the beams of light incident on this image area onto the sensor (4), **in that** guide webs (33) are arranged on the light exit surface (28, 29) of the illumination device (3), and **in that** these guide webs (33) are arranged to run approximately parallel to corresponding beams of light to be reflected.

7. Apparatus for the qualitative assessment of processed material (1) by means of at least one illumination device (3), at least one photoelectric sensor (4) and an evaluation device co-operating with the latter, **characterized in that** the material (1) to be inspected, the illumination device (3) and the sensor for defining reflection angle are arranged in such a way that each virtually ideally reflecting image area of the material (1) to be inspected effects virtually total reflection of the beams of light incident on this image area onto the sensor (4), and **in that**, in order to guide the material (1) to be inspected, a curved guide surface (7) is provided.

8. Method for the qualitative assessment of processed material (1) by means of at least one illumination device (3), at least one photoelectric sensor (4) and an evaluation device co-operating with the latter, **characterized in that**, by means of the arrangement of the material (1) to be inspected, the illumination device (3) and the sensor, reflection angles are defined in such a way that each weakly scattering image area of the material (1) to be inspected which reflects with a noticeably directed component reflects reflected beams of light virtually completely onto the sensor (4), **in that** an image of the material (1) to be inspected is broken down into a large number of pixels Pᵢ (Xᵢ; Yᵢ; Zᵢ) and, upon reflection, a pixel is assigned a value which differs from a value assigned to the colour "white".

## Revendications

1. Procédé pour évaluer qualitativement un matériau (1) traité, à l'aide d'au moins un dispositif d'illumination (3), d'au moins un capteur photoélectrique (4) et d'un dispositif d'évaluation, coopérant avec celui-ci, **caractérisé en ce que** des angles de réflexion sont fixés, au moyen de l'agencement du matériau (1) à inspecter, du dispositif d'illumination (3) et du capteur, de manière que chaque zone d'image faiblement dispersive, réfléchissant avec une proportion orientée de façon perceptible, du matériau (1) à inspecter réfléchit à peu près complètement sur le capteur (4) des rayons lumineux ayant été réfléchis, et **en ce que** le matériau à inspecter (1) est déformé de façon réversible, dans le but de générer un angle de réflexion nécessaire des rayons lumineux.

2. Procédé selon la revendication 1, **caractérisé en ce qu'**on utilise comme capteur (4) une caméra à éléments de surface CCD (4).

3. Procédé selon la revendication 1, **caractérisé en ce que** le matériau à inspecter (1) est guidé le long d'une surface de guidage (9) incurvée.

4. Procédé pour évaluer qualitativement un matériau (1) traité, à l'aide d'au moins un dispositif d'illumination (3), d'au moins un capteur photoélectrique (4) et d'un dispositif d'évaluation, coopérant avec celui-ci, le matériau (3) étant imprimé et muni d'au moins une caractéristique de sécurité, en particulier une zone d'image faiblement dispersive, réfléchissant avec une proportion orientée de façon perceptible, **caractérisé en ce qu'**on fixe des angles de réflexion à l'aide de l'agencement du matériau (1) à inspecter, du dispositif d'illumination (3) et du capteur, **en ce que** chaque caractéristique de sécurité faiblement dispersive, réfléchissant avec une proportion orientée de façon perceptible, du matériau (1) à inspecter provoque sur le capteur (4) une réflexion à peu près totale des rayons lumineux réfléchis, et **en ce que** cette réflexion totale est utilisée pour identifier la caractéristique de sécurité.

5. Dispositif pour évaluer qualitativement un matériau (1) façonné, à l'aide d'au moins un dispositif d'illumination (3), d'au moins un capteur photoélectrique (4) et d'un dispositif d'évaluation, coopérant avec celui-ci, **caractérisé en ce que** le matériau (1) à inspecter, le dispositif d'illumination (3) et le capteur sont disposés, pour fixer des angles de réflexion, de manière que toute zone d'image, réfléchissant à peu près de façon idéale, du matériau du matériau (1) à inspecter provoque une réflexion à peu près totale des rayons lumineux touchant cette zone d'image, sur le capteur (4), **en ce que** le dispositif d'illumination (3) présente deux surfaces de sortie de lumière (28, 29) disposées en forme de V, et **en ce qu'**une largeur (b3) du dispositif d'illumination (3) est supérieure à la largeur (b1) maximale du matériau (1) à inspecter.

6. Dispositif pour évaluer qualitativement un matériau (1) façonné, à l'aide d'au moins un dispositif d'illumination (3), d'au moins un capteur photoélectrique (4) et d'un dispositif d'évaluation, coopérant avec celui-ci, **caractérisé en ce que** le matériau (1) à inspecter, le dispositif d'illumination (3) et le capteur sont disposés, pour fixer des angles de réflexion, de manière que toute zone d'image, réfléchissant de façon à peu près idéale, du matériau (1) à inspecter provoque une réflexion à peu près totale sur le capteur (4) des rayons lumineux touchant cette zone d'image, **en ce que**, sur la surface de sortie de lumière (28, 29) du dispositif d'illumination (3), sont disposées des nervures de guidage (33), et **en ce que** ces nervures de guidage (33) sont disposées de façon à peu près parallèle à des rayons lumineux correspondants, devant être réfléchis.

7. Dispositif pour évaluer qualitativement un matériau (1) façonné, à l'aide d'au moins un dispositif d'illumination (3), d'au moins un capteur photoélectrique (4) et d'un dispositif d'évaluation, coopérant avec celui-ci, **caractérisé en ce que** le matériau (1) à inspecter, le dispositif d'illumination (3) et le capteur pour la fixation des angles de réflexion sont disposés de manière que toute zone d'image, réfléchissant de façon à peu près idéale, du matériau (1) à inspecter provoque une réflexion à peu près totale sur le capteur (4) des rayons lumineux touchant cette zone d'image, et **en ce que** une surface de guidage (7) incurvée est prévue pour assurer le guidage du matériau (1) à inspecter.

8. Procédé d'appréciation qualitative d'un matériau (1) façonné, à l'aide à l'aide d'au moins un dispositif d'illumination (3), d'au moins un capteur photoélectrique (4) et d'un dispositif d'évaluation coopérant avec celui-ci, **caractérisé en ce qu'**à l'aide de l'agencement du matériau (1) à inspecter, du dispositif d'illumination (3) et du capteur, des angles de réflexion sont fixés de manière que toute zone d'image faiblement dispersive, réfléchissant avec une proportion orientée de façon perceptible, du matériau (1) à inspecter réfléchit sur le capteur (4) à peu près complètement des rayons lumineux réfléchis, **en ce qu'**une image du matériau (1) à inspecter est décomposée en une pluralité d'éléments image Pⱼ (Xⱼ; Yⱼ; Zⱼ) et à un élément image en cas de réflexion étant associée une valeur, qui se distingue d'une valeur qui est associée à la couleur "blanche".
